# EUROPÄISCHE PATENTSCHRIFT

(11) **EP 1 146 304 B1**
(45) Veröffentlichungstag und Bekanntmachung des Hinweises auf die Patenterteilung: **14.09.2005**
(21) Anmeldenummer: 01101887.6
(22) Anmeldetag: 27.01.2001
(51) Int. Cl.: F27B 3/04, C22B 21/00, F27D 13/00

(54) **Zweikammerofen zum Tauchschmelzen von kontaminiertem Aluminiumschrott**
Double chamber furnace for immersion smelting of contaminated aluminium scrap
Four à deux chambres pour la fusion par immersion de déchets d'alumium contaminés

(30) Priorität: 24.03.2000 DE 10014711
(43) Veröffentlichungstag der Anmeldung: 17.10.2001
(73) Patentinhaber: Hertwich Engineering GmbH, 5280 Braunau (AT)
(72) Erfinder: Hertwich, Günther, 5280 Braunau (AT)
(74) Vertreter: Valentin, Ekkehard

(56) Entgegenhaltungen:
- EP-A- 0 265 531
- EP-A- 0 787 810
- GB-A- 741 035
- GB-A- 975 569

## Beschreibung

Die Erfindung betrifft einen Schmelzofen, insbesondere einen Zweikammerofen zum Tauchschmelzen von kontaminiertem Aluminiumschrott, insbesondere nach dem Oberbegriff des Anspruchs 1.

Das Einschmelzen von kontaminiertem, d. h. mit Ölen, Lacken und Kunststoffen behaftetem Aluminiumschrott erfolgt heute vor allem im Drehtrommelofen unter einer Salzdecke. Nachteilig sind bei diesem Verfahren vor allem die großen Mengen anfallender Salzschlacke (500 kg/t Aluminiumschrott), die niedrige Metallausbeute sowie Probleme der Schadstoffemission.

EP-A-265 531 beschreibt einen brennerbeheizten Schmelzofen für Aluminiumschrott, dessen mit einer erhöhten Schmelzplattform ausgestatteter rechts angeordneter Raum verbunden ist mit einem Vorwärmschacht für Chargiermaterial. Im Vorwärmschacht, welcher von den Rauchgasen des Schmelzofens durchströmt ist, sind in verschiedenen Höhenniveaus bewegbare Roste angeordnet, durch deren Bewegung das auf ihnen aufliegende Chargiermaterial nach unten fällt, bis es schließlich auf der Schmelzplattform des rechten Ofenraums zu liegen kommt und von dort in den mit Schmelze gefüllten linken Ofenraum rutscht. Im Vorwärmschacht oben abgeführtes Rauchgas wird dort unten wieder zugeführt.

EP-A-787 810 beschreibt einen Zweikammerofen zum Schmelzen von Aluminiumschrott, dessen erste Kammer mit einer oberhalb angeordneten Chargierkammer über Chargierklappen verbindbar ist. Die Chargierkammer ist von gekühlten Abgas aus einer Abgasreinigungsanlage durchströmt, der sowohl das Abgas der Chargierkammer als auch die Ofenabgase zugeführt werden.

Eine Verbesserung, vor allem für legierungsreine Schrotte, brachte das Einschmelzen in Zweikammeröfen mit einer in diesen angeordneten Abschwelbrücke. Der wesentliche Vorteil dieser Methode liegt
a) im Entfall von Salzschlacke und
b) in einer höheren Metallausbeute, da das bei dieser Methode verwendete Tauchschmelzverfahren (der Schrott wird durch Kontakt mit heißer Metallschmelze aufgeschmolzen) nur ganz geringe Oxidationsverluste mit sich bringt. Wesentliche Schwächen dieses Verfahrens liegen jedoch in der Chargierung des Aluminiumschrotts und dem Abschwelen der nicht metallischen Anhaftungen.

Zu a): Trotz wesentlicher Verbreiterung der Abschwelbrücke ist das Absetzen des Schrottes auf diese ein Problem. Abhängig von der Art des Schrottes können beim Absetzen wesentliche Schrottmengen aus dem Ofen herausfallen oder ohne Vorwärmung und Abschwelung direkt in das Schmelzbad fallen. Ersteres stellt eine arbeitstechnische Behinderung dar, letzteres hat folgende Nachteile:
   - Beim Einsatz von feuchtem Schrott kann es bei direktem Kontakt mit der Metallschmelze zu Explosionen kommen.
   - Gelangt mit organischen Verunreinigungen behafteter Schrott ohne Abschwelen in die Metallschmelze, so kommt es zu einem schlagartigen Freisetzen von größeren Mengen Schwelgas, dessen vollständige Verbrennung im Ofen dann nicht möglich ist und zu einer kurzzeitigen eklatanten Überschreitung der zulässigen Abgaswerte führt. Außerdem reagiert ein Teil der Anhaftungen mit Aluminium und erhöht dadurch die Metallverluste.
Zu b): Die chargierte Schrottmenge lässt sich bei diesem Verfahren in wirtschaftlich vertretbaren Zeiten nicht gleichmäßig erwärmen und abschwelen. Durch Strahlungswärme der Schrottkammer sowie durch beidseitiges Anblasen des "Schrottberges" mit heißen Rauchgasen werden zwar die oberflächennahen Bereiche des Schrotts ausreichend durchwärmt, nicht jedoch die inneren und bodennahen Bereiche. Dies hat folgende Nachteile:
   - Befinden sich in den nicht ausreichend durchwärmten Schrottbereichen auch organische Anhaftungen, dann kommt es beim Einstoßen des Schrottes in die Schmelze zu einer schlagartigen Freisetzung großer Mengen von Schwelgasen, die nicht zur Gänze verbrannt werden können und daher zu einer eklatanten Überschreitung der Abgaswerte führen.
   - Eine Verbesserung der Durchwärmung durch verlängerte Aufheizzeiten führt zu Durchsatzverlusten. Erhöht man zur Steigerung des Wärmeeintrages in den Schrottberg die Ofenraumtemperaturen in der Schrottkammer, so kommt es bereits zu Aufschmelzungen von Aluminium in den oberflächennahen Bereichen, was wiederum höhere Oxidationsverluste hervorruft.

Ausgeführte Öfen dieser Art können daher nur mit folgenden Einschränkungen betrieben werden:
- Nur maximal 35 % der eingesetzten Metallmenge dürfen kontaminierte Schrotte sein. Der Rest müssen saubere Schrotte und Rohmetallblöcke sein.
- Die Chargen müssen so zusammengestellt sein, dass unten saubere Schrotte und oben kontaminierte Schrotte liegen.
- Lange Profilschrotte (wie sie in Strangpresswerken in relativ großen Mengen entstehen), müssen vor dem Einsetzen in kurze Stücke zerhackt werden.

Der Erfindung liegt die Aufgabe zugrunde, einen gattungsgemäßen Schmelzofen zu schaffen, der mit bis zu 100 % kontaminiertem Aluminiumschrott chargiert werden darf und diesen wirtschaftlich und umweltfreundlich verarbeitet.

Die Aufgabe wird gelöst durch die kennzeichnenden Merkmale des Anspruchs 1. Gegenüber der offenen Abschwelbrücke ist der geschlossene Abschwelraum erheblich einfacher zu chargieren. Die Gefahr des Herausfallens der Charge aus demselben ist gering und eventuell herausgefallene, kontaminierte und nasse Stücke können nicht in die Schmelze gelangen und dort zu Explosionen oder Emissionsspitzen unverbrannter Schwelgase führen. Eine Schichtung oder Zerkleinerung der Charge ist bei entsprechender Dimensionierung des Abschwelraums nicht erforderlich. Deshalb ist die Verwendung einer zu 100 % aus kontaminiertem Schrott bestehenden Charge problemlos möglich

Während bei konventionellen Zweikammeröfen der auf der Abschwelbrücke freiliegende Schrottberg nur von außen mit Rauchgasen angeblasen und somit nur oberflächlich erwärmt wird, findet bei dem erfindungsgemäßen, vom Zweikammerofen getrennt angeordneten Abschwelraum eine Zwangsdurchströmung sämtlicher freier Querschnitte der Charge statt. Dadurch erhöht sich die Wärme aufnehmende Oberfläche derselben auf mindestens das 10-fache, was zu entsprechend rascher und gleichmäßiger Erwärmung und vollständiger Dekontaminierung derselben führt. Dadurch steigen der Durchsatz und damit die Wirtschaftlichkeit des Zweikammerofens erheblich an. Da dazu keine überhöhte Rauchgastemperatur erforderlich ist, werden Überhitzung, Anschmelzung und Oxidation der Charge vermieden.

Es ist auch denkbar, den Zweikammerofen in zwei separate Öfen einzuteilen, die durch eine Rückströmleitung für die Schmelze und durch eine Rauchgasleitung miteinander verbunden sind. Diese Lösung bringt jedoch Dichtprobleme, Wärmeverluste und erhöhten Platzbedarf mit sich.

Bei einer anderen Modifikation besitzt der Schmelzofen nur eine Ofenkammer, deren Schmelze durch Umwälzen mit einer Umwälzpumpe auf gleichmäßiger Temperatur gehalten wird. Hierbei entstammen die durch den Abschwelraum strömenden Rauchgase einem außerhalb des Schmelzofens angeordneten Rückströmkanal. Diesem liefert ein Gasbrennersystem die zur Vorwärmung der Charge und zum Verbrennen der Schwelgase erforderlichen Energie.

Diese Lösung hat den Nachteil einer hohen Temperaturbelastung des Schließelementes (ca. 1000 °C gegenüber 600 °C beim Zweikammerofen) und des Wärmeverlustes des Rückströmkanals, die beide zu höherem Bauaufwand führen.

Vorteilhaft ist, dass der Abschwelraum zumindest je eine, vorzugsweise gegenüberliegend angeordnete Einlass- und Auslassöffnung für die Rauchgase aufweist. Die Lage der Einlass- und Auslassöffnung ist eine wichtige Voraussetzung für ein zwangsweises Durchströmen des gesamten Abschwelraums und dessen Charge.

Es ist ferner von Vorteil, dass der Abschwelraum als Füllschacht für die erste Ofenkammer ausgebildet, auf dieser vorzugsweise senkrecht stehend angeordnet und mit derselben über ein Schließelement verbindbar ist. Die gewählte Anordnung des Abschwelraums macht diesen zu einem integralen Bestandteil des Zweikammerofens. Seine Ausbildung als Füllschacht für die erste Ofenkammer vereinfacht den Aufbau und Betrieb des Zweikammerofens. Die senkrechte Anordnung des Abschwelraums erleichtert dessen rasche und vollständige Entleerung. Das Schließelement stellt die Verbindung zwischen Abschwelraum und erster Ofenkammer her.

Wenn das Schließelement zwei Bodenklappen oder einen Schieber aufweist, mit denen der gesamte Querschnitt des Abschwelraums freilegbar ist, kann der Abschwelraum durch die Öffnungsgeschwindigkeit der Bodenklappen oder des Schiebers dosierbar und bei völliger Öffnung derselben rasch und vollständig entleert werden.

Von Vorteil ist weiterhin, dass der Abschwelraum einen vorzugsweise quadratischen Querschnitt aufweist, in dem ein dazu passend ausgebildeter Druckkörper mit Spiel axial bewegbar ist. Der Druckkörper füllt den Leerraum über der Charge im Abschwelraum auf und drückt aus der Charge ragende Schrottteile nieder. Auf diese Weise werden Kurzschluss- oder Bypass-Strömungen oberhalb der Charge und in deren oberen Bereich vermieden. Die Rauchgase werden so zum gleichmäßigen Durchströmen der Charge gezwungen, wodurch deren gleichmäßige Erwärmung und Abschwelung sichergestellt sind.

Eine vorteilhafte Ausbildung der Erfindung besteht auch darin, dass als äußerer Verschluss des Abschwelraums eine Abdeckhaube vorgesehen ist, die eine passende Ausnehmung und eine Führung für den Druckkörper aufweist. Die Führung verhindert ein horizontales Verwandern des Druckkörpers und begrenzt dessen Eindringtiefe. Bei angehobenem Druckkörper ist dieser in etwa bündig mit der Dichtfläche der Abdeckhaube. Dadurch kann diese nach geringfügigem Anheben seitlich verfahren werden, um so die Einfüllöffnung des Abschwelraums für eine neue Befüllung freizumachen.

Eine vorteilhafte Weiterentwicklung der Erfindung besteht ferner darin, dass in den Ofenkammern zumindest je ein Gasbrennersystem vorgesehen ist und dass die Gasbrennersysteme eine von O₂-Sensoren überwachte, brenngasseitige Regelung eines konstanten Luftüberschusses aufweisen. Die O₂-Sensoren regeln die Gasbrennersysteme auf einen bestimmten Luftüberschuss, (z. B. 2 %) ein, dem bei konstantem Heizwert des Brenngases eine bestimmte Rauchgastemperatur entspricht. Wenn diese durch zusätzliches Verbrennen von Schwelgas mit anderem Heizwert trotz konstantem Luftüberschuss verändert wird, kann eine Zusatzregelung der Rauchgastemperatur über Temperatursensoren erforderlich werden.

Vorteilhaft ist auch, dass das erste Gasbrennersystem auf eine Rauchgastemperatur von vorzugsweise 600 °C in der ersten Ofenkammer und das zweite Gasbrennersystem auf eine Rauchgastemperatur von vorzugsweise 1000 °C in der zweiten Ofenkammer geregelt ist. Das in der ersten Ofenkammer angeordnete erste Gasbrennersystem liefert die Wärme zum Aufheizen des Aluminiumschrotts auf eine Temperatur, die unterhalb von dessen Schmelzpunkt liegt, und zu dessen rascher Dekontaminierung führt. Die dabei entstehenden Schwelgase werden weitgehend in der ersten Ofenkammer verbrannt. Das in der zweiten Ofenkammer vorgesehene zweite Gasbrennersystem liefert die zum Einschmelzen der Charge erforderliche Wärme bei einer Temperatur, die zum Spalten von toxischen Schwelgasresten aus der ersten Ofenkammer ausreicht.

Die Intensität der Schwelgasbildung wird durch die im Abschwelraum herrschende Temperatur und Geschwindigkeit der Rauchgase variiert. Dadurch ist eine rasche Dekontaminierung ohne Emissionsspitzen zu verwirklichen. Die Temperatur der Rauchgase kann durch das erste Brennersystem, ihre Geschwindigkeit durch die Drehzahl eines im Rauchgasumwälzsystem angeordneten Rauchgasgebläses in weiten Grenzen geregelt werden.

In vorteilhafter Ausgestaltung der Erfindung ist vorgesehen, dass der zum Erreichen einer bestimmten Rauchgastemperatur in der ersten Ofenkammer erforderliche Brenngasstrom des ersten Gasbrennersystems beim Abschwelen umgekehrt proportional zum jeweiligen Schwelgasstrom ist. Die Regelung des ersten Gasbrennersystems auf konstanten Luftüberschuss bedingt eine Zurücknahme des Brenngasstromes bei ansteigendem Schwelgasstrom. Auf diese Weise ist die Höhe von dessen Brenngasstrom ein Maß für den Verlauf und den Abschluss der Dekontaminierung. Die bei der thermischen Dekontaminierung anfallenden Schwelgase liefern einen erheblichen Anteil der erforderlichen Energie.

Vorteilhaft ist weiterhin, dass die zweite Ofenkammer durch eine Rauchgasleitung mit der ersten Ofenkammer verbunden ist. Durch diese gelangen die Rauchgase der ersten Ofenkammer in den Wirkungsbereich der zweiten Ofenkammer. Enthalten die aus der ersten Ofenkammer zugeführten Rauchgase noch unverbrannte Schwelgasanteile, so werden sie auf diese Weise einer Nachverbrennung zugeführt. Eine O₂-Überwachung der Rauchgase in der zweiten Ofenkammer bewirkt, dass für diese Nachverbrennung immer ausreichend Luftsauerstoff vorhanden ist. Alle im Schmelzofen entstehenden Rauchgase werden durch eine Abgasleitung aus der zweiten Ofenkammer einem Verbrennungsluftvorwärmer zugeführt. Dieser dient zum raschen Abkühlen der Rauchgase und zur Zurückgewinnung von deren Wärme. Das Vorwärmen der Verbrennungsluft senkt den Energieverbrauch des Zweikammerofens und fördert damit dessen Wirtschaftlichkeit. Das rasche Abkühlen der Rauchgase verhindert eine Rekombination der bei hoher Temperatur in der zweiten Ofenkammer gespaltenen toxischen Stoffe und fördert dadurch die Umweltfreundlichkeit des Zweikammerofens.

Der Boden der ersten Ofenkammer weist im Bereich unterhalb des Abschwelraums eine erhöhte Schmelzplattform auf, die bei niedrigem Schmelzespiegelniveau aus diesem herausragt. Dies ist der Fall beim Chargieren der ersten Ofenkammer. Deshalb fällt die Charge auf die schmelzefreie Schmelzplattform und nicht in die Schmelze, wo sie unkontrolliert eingeschmolzen würde.

Vorteilhaft ist auch, dass eine in die erste Ofenkammer fördernde Schmelzepumpe und eine drosselnde Schmelzerücklaufleitung zwischen den Ofenkammern vorgesehen sind und dass die Fördermenge der Schmelzepumpe in zumindest zwei Stufen einstellbar ist. Bei Stillstand der Schmelzepumpe herrscht in beiden Ofenkammern gleiches und somit gleich niedriges Schmelzespiegelniveau. Dies ist während der Chargierung der ersten Ofenkammer vorgesehen.

Beim Einschalten der Schmelzepumpe steigt der Schmelzespiegel in der ersten Ofenkammer an, da der Schmelzerücklauf in die zweite Ofenkammer gedrosselt ist. Dadurch wird die Schmelzplattform überflutet und ein kontrolliertes Einschmelzen der Charge ermöglicht.

Wenn eine Niveaumesseinrichtung zur Begrenzung des maximalen Schmelzespiegelniveaus in der ersten Ofenkammer vorgesehen ist, wird ein unerwünschter Anstieg desselben verhindert.

Weitere Merkmale der Erfindung ergeben sich aus den Patentansprüchen, der folgenden Beschreibung und den Zeichnungen, in denen Ausführungsbeispiele der Erfindung schematisch dargestellt sind.

Es zeigen:
- Fig. 1: einen Vertikalschnitt durch einen Zweikammerofen mit getrenntem Abschwelraum,
- Fig. 2: ein Funktionsschema eines im Horizontalschnitt dargestellten Zweikammerofens,
- Fig. 3a: einen Vertikalschnitt durch einen Zweikammerofen mit nach außen offenem Abschwelraum und darüber befindlichem, gefüllten Chargierwagen,
- Fig. 3b: den Zweikammerofen von Fig. 3a, jedoch mit chargiertem, nach außen offenem Abschwelraum,
- Fig. 3c: den Zweikammerofen von Fig. 3b, jedoch mit außen geschlossenen und aufgefülltem Abschwelraum und zusammengedrückter Charge,
- Fig. 3d: den Zweikammerofen von Fig. 3c, jedoch mit nach unten offenem Abschwelraum und mit auf einer Schmelzplattform oberhalb des Schmelzspiegels abgeladener Charge.

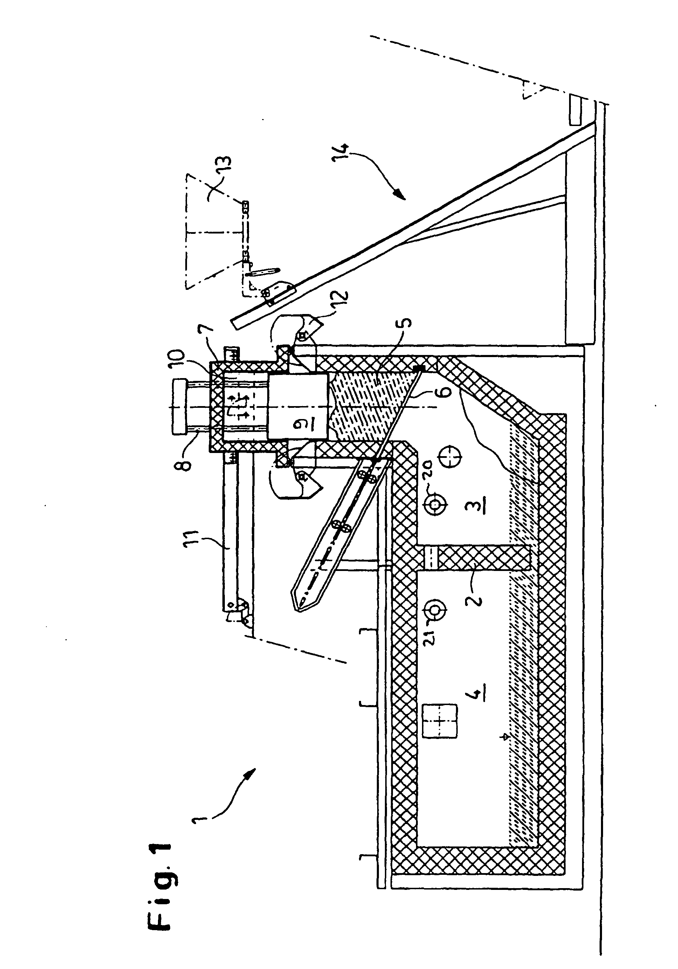

Der in Figur 1 dargestellte Zweikammerofen 1 wird durch eine Zwischenwand 2 in eine erste Ofenkammer 3 und eine zweite Ofenkammer 4 geteilt. Auf der ersten Ofenkammer 3 ist ein Abschwelraum 5 mit quadratischem Querschnitt angeordnet, der als Füllschacht für die erste Ofenkammer 3 ausgebildet ist. Er ist durch einen Schieber 6 von der ersten Ofenkammer 3 trennbar und durch eine Abdeckhaube 7 nach außen abschließbar. Die Abdeckhaube 7 besitzt eine Führung 8 und eine passende Ausnehmung 10 für einen Druckkörper 9, der mit Spiel im Abschwelraum 5 axial bewegbar ist. Der Druckkörper 9 dient zur Verdichtung und damit zur Homogenisierung der Charge im Abschwelraum 5 und zu dessen Auffüllung. Dies ist eine wichtige Voraussetzung für eine gleichmäßige Durchströmung der Charge, die zu einer gleichmäßigen Erwärmung und Dekontaminierung derselben führt.

Der Druckkörper 9 ist mit Hilfe der Führung 8 in die Ausnehmung 10 der Abdeckhaube 7 zurückziehbar, wodurch die Abdeckhaube 7 nach leichtem Anheben einer Führungsschiene 11 auf dieser seitlich verfahrbar ist. Dadurch ist der Abschwelraum 5 für eine Chargierung geöffnet. Diese erfolgt nach dem Einschwenken von an der Einfüllöffnung des Abschwelraums 5 angelenkten Trichterplatten 12 durch einen kippbaren Chargierwagen 13 eines Schrägaufzuges 14.

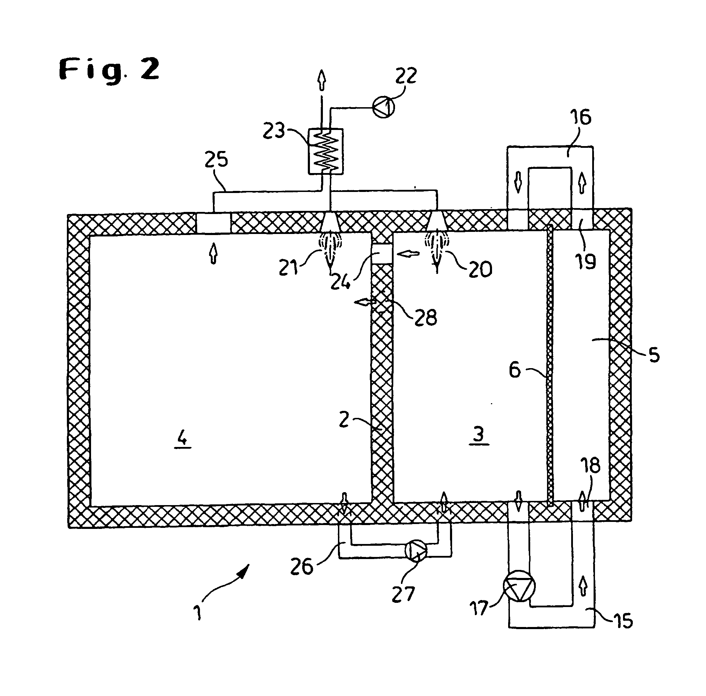

Figur 2 zeigt einen Horizontalschnitt des schematisch dargestellten Zweikammerofens 1. Analog zu Fig. 1 sind auch hier die Zwischenwand 2, die erste Ofenkammer 3, die zweite Ofenkammer 4, der Abschwelraum 5 und der Schieber 6 dargestellt. Der Abschwelraum 5 steht über einen ersten Rauchgaskanal 15 und einen zweiten Rauchgaskanal 16 mit der ersten Ofenkammer 3 in Strömungsverbindung.

Im ersten Rauchgaskanal 15 ist ein drehzahlregelbares Umwälzgebläse 17 vorgesehen, das Rauchgase aus der ersten Ofenkammer 3 über eine Einlassöffnung 18 in den Abschwelraum 5 fördert. Nach dessen Längsdurchströmung gelangen die Rauchgase durch eine der Einlassöffnung 18 gegenüberliegende Auslassöffnung 19 und den zweiten Rauchgaskanal 16 zurück in die erste Ofenkammer 3. Der so geschlossene Kreislauf bewirkt eine Zwangsdurchströmung des Abschwelraums 5 und seiner Charge.

In der ersten Ofenkammer 3 ist ein erstes Gasbrennersystem 20, in der zweiten Ofenkammer 4 ein zweites Gasbrennersystem 21 angeordnet. Diese werden von einem Verbrennungsluftgebläse 22 mit Verbrennungsluft versorgt, die durch einen Verbrennungsluftvorwärmer 23 aufgeheizt ist. Dieser wird im Gegenstrom von Rauchgasen durchströmt, die durch eine Rauchgasleitung 24 aus der ersten Ofenkammer 3 in die zweite Ofenkammer 4 und aus dieser über eine Abgasleitung 25 in denselben gelangen. Auf diese Weise wird ein beträchtlicher Teil der Abwärme zurückgewonnen. Eine Schmelzeleitung 26 mit einer elektromagnetischen Schmelzepumpe 27 ermöglicht in Verbindung mit einer Schmelzeöffnung 28 in der Zwischenwand 2 ein Umwälzen der Schmelze zwischen erster und zweiter Ofenkammer 3, 4.

Die für die Erwärmung der Charge erforderliche Energie wird durch das in der ersten Ofenkammer 3 installierte erste Gasbrennersystem 20 zur Verfügung gestellt. Die heißen Rauchgase zirkulieren durch das Umwälzgebläse 17 zwischen der ersten Ofenkammer 3 und dem Abschwelraum 5. Durch die große Oberfläche der zwangsdurchströmten Charge tritt deren rasche und gleichmäßige Erwärmung und Dekontaminierung ein. Durch Variation der Rauchgastemperatur in der ersten Ofenkammer 3 und der Drehzahl des Umwälzgebläses 17 kann der Wärmeeintrag in die Charge in weiten Grenzen verändert und damit Spitzen bei der Freisetzung von Schwelgasen vermieden werden. Außerdem kann mit Heißgastemperaturen gearbeitet werden, durch die ein partielles Anschmelzen von exponierten Teilen der Charge vermieden wird. Der Luftüberschuss der Rauchgase in der ersten Ofenkammer 3 wird über ein Sauerstoffmessgerät mit O₂-Sensoren gesteuert. Sinkt der Sauerstoffgehalt durch Verbrennen von Schwelgasen unter einen eingestellten Sollwert (z. B. 2 % O₂), so wird dieses durch Reduktion der Brenngaszufuhr bei konstanter Verbrennungsluftzufuhr ausgeglichen. Auf diese Weise steht immer ausreichend Luft-Sauerstoff zur Verbrennung der Schwelgase zur Verfügung. Da die Brenngaszufuhr umgekehrt proportional zur Schwelgasmenge ist, kann mit dem Brenngasstrom der Verlauf und Abschluss der Dekontaminierung bestimmt werden.

Bei stärker kontaminiertem Schrott (über etwa 2 % Kohlenwasserstoffanteile) können nicht alle Schwelgase im ersten Ofenraum 3 verbrannt werden, da die dabei freigesetzte große Wärmemenge nicht zur Aufwärmung des Schrottes benötigt wird. Die Ofenraumtemperatur in der ersten Ofenkammer 3 (ca. 600 °C) setzt hier eine obere Grenze für die menge der verbrannten Schwelgase. Es gibt deshalb während des Abschwelprozesses Phasen, in denen der O₂-Gehalt der Rauchgase nicht auf 2 % gehalten werden kann und in dem unverbrannte Schwelgase zwischen dem ersten Ofenraum 3 und dem Abschwelraum 5 zirkulieren. Mit den Rauchgasen gelangen diese unverbrannten Schwelgase dann in die zweite Ofenkammer 4 und werden dort nachverbrannt. In der zweiten Ofenkammer 4 wird bei Schwelgasverbrennung die Brenngaszufuhr ebenfalls entsprechend reduziert.

Durch Verringern der Vorwärmung der Verbrennungsluft kann der Wärmebedarf des Schmelzofens und damit die zulässige Kohlenwasserstoffmenge des Aluminiumschrotts erhöht werden.

Die Rauchgase aus der ersten Ofenkammer 3 gelangen durch die Rauchgasleitung 24 in die zweite Ofenkammer 4. Dort werden durch das zweite Gasbrennersystem 21 konstant 900 - 1100 °C und ein durch O₂-Sensoren geregelter Luftüberschuss aufrechterhalten.

Restliche, unverbrannte Kohlen-Wasserstoffe und beim Abschwelen entstandene toxische Gase, wie Dioxine und Furane werden durch die in der zweiten Ofenkammer 4 herrschenden Bedingungen verbrannt bzw. gespalten. Durch die anschließende rasche Abkühlung der Rauchgase in dem Verbrennungsluftvorwärmer 23 wird eine Rückbildung der toxischen Verbindungen verhindert.

Das zweite Gasbrennersystem 21 dient auch zur Erwärmung des Schmelzbades in der zweiten und ersten Ofenkammer 4, 3, die schmelzeseitig über die Schmelzeleitung 26 und die darin angeordnete elektromagnetische Schmelzepumpe 27 sowie über die Schmelzeöffnung 28 im Schmelzekreislauf verbunden sind.

Die in das Schmelzebad der zweiten Ofenkammer 4 eingebrachte Wärme dient zum Aufschmelzen der auf ca. 600 °C vorgewärmten Charge. Diese gelangt nach Abschluss der Dekontaminierung durch Öffnen der Schiebetür 6 in das Schmelzebad der ersten Ofenkammer 3, wo sie innerhalb von Minuten durch Tauchschmelzen geschmolzen wird.

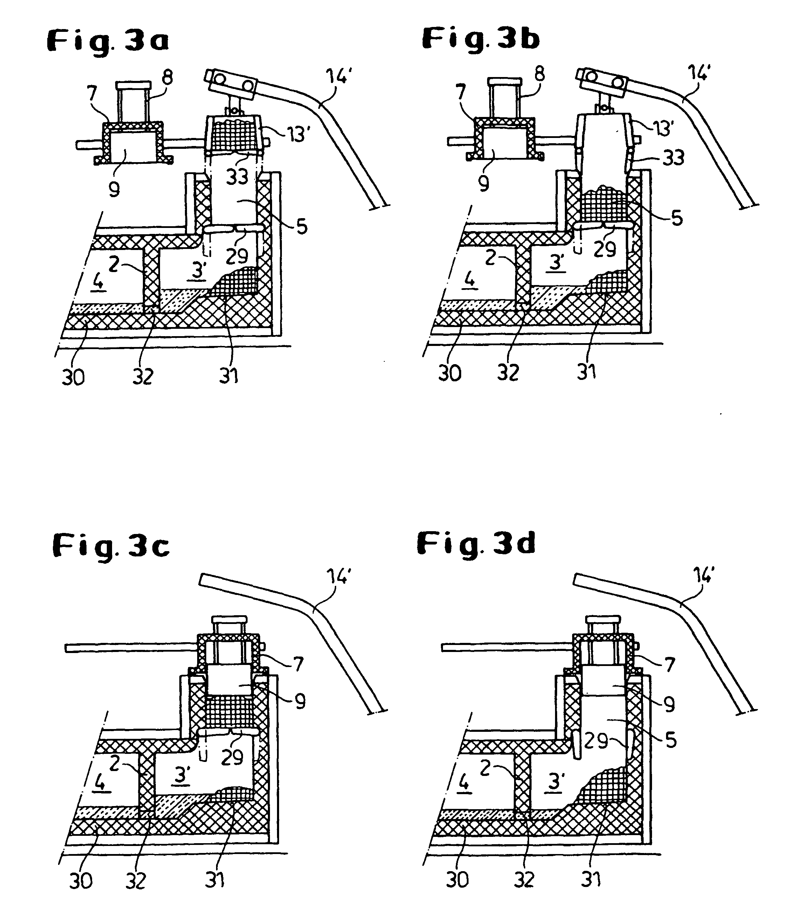

Die Figuren 3a bis 3d zeigen eine Variante des in Figur 1 und 2 dargestellten Zweikammerofens. Der Abschwelraum 5 weist anstelle des Schiebers 6 zwei Bodenklappen 29 auf, die sich zur ersten Ofenkammer 3 hin öffnen und ein kontrolliertes Chargieren derselben ermöglichen. Unterhalb des Abschwelraums 5 ist auf dem Boden 30 der ersten Ofenkammer 3 eine erhöhte Schmelzplattform 31 angeordnet. Das Schmelzespiegelniveau ist bei dieser Variante variabel. Eine Schmelzepumpe fördert Schmelze in die erste Ofenkammer 3, von wo diese über eine drosselnde Schmelzrücklaufleitung 32 zurück in die zweite Ofenkammer 4 fließt. Bei stillstehender Schmelzepumpe ist das Schmelzespiegelniveau in beiden Ofenkammern gleich und niedrig, so dass die Schmelzplattform 31 schmelzefrei ist. Bei laufender Schmelzepumpe steigt das Schmelzespiegelniveau in der ersten Ofenkammer 3 wegen der gedrosselten Rückströmung der Schmelze an, so dass die Schmelzplattform 31 überflutet wird. Die Höhe des Schmelzspiegelniveaus wird durch eine Niveaumessvorrichtung in der ersten Ofenkammer begrenzt, die die Förderleistung der Schmelzepumpe regelt.

Für die Chargierung des Abschwelraums 5 ist ein anderer Schrägaufzug 14' mit einem anderen Chargierwagen 13' vorgesehen. Der andere Chargierwagen 13' ist nicht kippbar, sondern über zwei nach unten klappbare andere Bodenklappen 33 entleerbar. Die aufgeklappten anderen Bodenklappen 33 dienen auch zur Führung der Charge beim Einfüllen derselben in den Abschwelraum. Sie ermöglichen im Vergleich zum Einkippen eine gleichmäßigere Befüllung des Abschwelraumes 5 mit Befüllchargen unterschiedlicher Schrottkonsistenz. Die Abdeckhaube 7 mit Führung 8 und Druckstück 9 entspricht der ersten Variante des Zweikammerofens.

Die Chargierung des Abschwelraums 5 und der ersten Ofenkammer 3 läuft folgendermaßen ab:
Figur 3a:
   - Die Abdeckhaube 7 mit dem Druckstück 9 ist seitlich verfahren,
   - der beladene andere Chargierwagen 13' befindet sich in Entladeposition über dem Abschwelraum 5,
   - die Schmelzepumpe ist eingeschaltet, der Schmelzespiegel in der ersten Ofenkammer 3 befindet sich oberhalb der Schmelzplattform 31, der darauf liegende Schrottberg der vorhergehenden Charge unterliegt der Tauchschmelzung.
Fig. 3b:
   - Die Charge wird durch Entriegeln der anderen Bodenklappen 33 des anderen Chargierwagens 13' in den leeren Abschwelraum 5 entladen,
   - Fortsetzung der Tauchschmelzung auf der Schmelzplattform 31,
Figur 3c:
   - Verfahren des anderen Chargierwagens 13 zu dessen Neubeladung und Aufsetzen der Abdeckhaube 7 auf den Abschwelraum 5,
   - Auffüllen desselben und Zusammendrücken der Charge durch das Druckstück 9,
   - Aufheizen und Dekontaminieren der Charge,
   - Beenden des Tauchschmelzens der vorhergehenden Charge,
Figur 3d:
   - Abstellen der Schmelzepumpe, dadurch Auftauchen der Schmelzplattform 31 aus dem sinkenden Schmelzespiegel,
   - Öffnen der Bodenklappe 29 des Abschwelraums 5 und Entladen der vorgewärmten und dekontaminierten Charge auf die Schmelzplattform 31.

Der erfindungsgemäße Zweikammerofen zeichnet sich gegenüber gängigen Zweikammeröfen mit Abschmelzbrücke durch einen wesentlich gesteigerten Durchsatz bei vermindertem spezifischen Energieaufwand, verbesserter Umweltfreundlichkeit, vereinfachter Chargierung, besser kontrollierbares und vollständigeres Abschwelen sowie durch höhere, noch beherrschbare Anteile an organischen Verunreinigungen des Aluminiumschrotts aus.

### Bezugszeichenliste

- 1.: Zweikammerofen
- 2.: Zwischenwand
- 3.: Erste Ofenkammer
- 3': andere erste Ofenkammer
- 4.: Zweite Ofenkammer
- 5.: Abschwelraum
- 6.: Schieber
- 7.: Abdeckhaube
- 8.: Führung
- 9.: Druckkörper
- 10.: Ausnehmung
- 11.: Führungsschiene
- 12.: Trichterklappen
- 13.: Chargierwagen
- 13': anderer Chargierwagen
- 14.: Schrägaufzug
- 14': anderer Schrägaufzug
- 15.: Erster Rauchgaskanal
- 16.: Zweiter Rauchgaskanal
- 17.: Umwälzgebläse
- 18.: Einlassöffnung
- 19.: Auslassöffnung
- 20.: Erstes Gasbrennersystem
- 21.: Zweites Gasbrennersystem
- 22.: Verbrennungsluftgebläse
- 23.: Verbrennungsluftvorwärmer
- 24.: Rauchgasleitung
- 25.: Abgasleitung
- 26.: Schmelzeleitung
- 27.: Schmelzepumpe
- 28.: Schmelzeöffnung
- 29.: Bodenklappe
- 30.: Boden
- 31.: Schmelzplattform
- 32.: drosselnde Schmelzerücklaufleitung
- 33.: andere Bodenklappe

## Patentansprüche

1. Schmelzofen, insbesondere Zweikammerofen zum Tauchschmelzen von kontaminiertem Aluminiumschrott, mit einer ersten (3) und einer zweiten Ofenkammer (4), einer Gasheizung (20, 21), einem Rauchgasumwälzsystem (15-17) und mit einem von dem Zweikammerofen (1) getrennt angeordneten, jedoch mit diesem verbindbaren Abschwelraum (5) zur thermischen Dekontaminierung der Charge, welcher Abschwelraum (5) mit heißen Rauchgasen der ersten Ofenkammer (3) zwangsdurchströmbar ist, **dadurch gekennzeichnet, dass** die durch den Abschwelraum (5) hindurchgeführten Rauchgase in die erste Ofenkammer (3) zurükgeführt werden.

2. Zweikammerofen nach Anspruch 1, **dadurch gekennzeichnet, dass** der Abschwelraum (5) zumindest je eine, vorzugsweise gegenüberliegend angeordnete Einlass- und Auslassöffnung (18, 19) für die Rauchgase aufweist.

3. Zweikammerofen nach Anspruch 2, **dadurch gekennzeichnet, dass** der Abschwelraum (5) als Füllschacht für die erste Ofenkammer (3) ausgebildet, auf dieser vorzugsweise senkrecht stehend angeordnet und mit derselben über ein Schließelement verbindbar ist.

4. Zweikammerofen nach Anspruch 3, **dadurch gekennzeichnet, dass** als Schließelement zwei Bodenklappen (29) oder ein Schieber (6) vorgesehen sind, mit denen der gesamte Querschnitt des Abschwelraums (5) freilegbar ist.

5. Zweikammerofen nach Anspruch 4, **dadurch gekennzeichnet**, das der Abschwelraum (5) einen quadratischen Querschnitt aufweist, in dem ein dazu passend ausgebildeter Druckkörper (7) mit Spiel axial bewegbar ist.

6. Zweikammerofen nach Anspruch 5 , **dadurch gekennzeichnet, dass** als äußerer Verschluss des Abschwelraums (5) eine Abdeckhaube (7) vorgesehen ist, die eine passende Ausnehmung (10) und eine Führung (8) für den Druckkörper (9) aufweist.

7. Zweikammerofen nach Anspruch 6, **dadurch gekennzeichnet, dass** in den Ofenkammern (3, 4) zumindest je ein Gasbrennersystem (20, 21) vorgesehen ist, und dass die Gasbrennersysteme (20, 21) eine von O₂-Sensoren überwachte, brenngasseitige Regelung eines konstanten Luftüberschusses aufweisen.

8. Zweikammerofen nach Anspruch 7, **dadurch gekennzeichnet, dass** das erste Gasbrennersystem (20) auf eine Rauchgastemperatur von vorzugsweise 600 °C in der ersten Ofenkammer (3) und das zweite Gasbrennersystem (21) auf eine Rauchgastemperatur von vorzugsweise 1000 °C in der zweiten Ofenkammer (4) geregelt ist.

9. Zweikammerofen nach Anspruch 8, **dadurch gekennzeichnet, dass** die Intensität der Schwelgasbildung durch die im Abschwelraum (5) herrschende Temperatur und Geschwindigkeit der Rauchgase variierbar ist.

10. Zweikammerofen nach Anspruch 9, **dadurch gekennzeichnet, dass** der zum Erreichen einer bestimmten Rauchgastemperatur in der ersten Ofenkammer (3) erforderliche Brenngasstrom des ersten Gasbrennersystems (20) beim Abschwelen umgekehrt proportional zum jeweiligen Schwelgasstrom ist.

11. Zweikammerofen nach Anspruch 10, **dadurch gekennzeichnet, dass** die zweite Ofenkammer (4) durch eine Rauchgasleitung (24) mit der ersten Ofenkammer (3) und durch eine Abgasleitung (25) mit einem Verbrennungsluftvorwärmer (23) in Strömungsverbindung steht.

12. Zweikammerofen nach Anspruch 11, **dadurch gekennzeichnet, dass** der Boden (30) der ersten Ofenkammer (3) im Bereich unterhalb des Abschwelraums (5) eine erhöhte Schmelzplattform (31) aufweist, die bei in beiden Ofenkammern (3, 4) gleichem Schmelzspiegelniveau aus diesem herausragt.

13. Zweikammerofen nach Anspruch 12, **dadurch gekennzeichnet, dass** eine in die erste Ofenkammer (3) fördernde Schmelzepumpe (27) und eine zwischen den Ofenkammern (3, 4) angeordnete, drosselnde Schmelzerücklaufleitung (32) vorgesehen sind und dass die Fördermenge der Schmelzepumpe (27) in zumindest zwei Stufen einstellbar ist.

14. Zweikammerofen nach Anspruch 13, **dadurch gekennzeichnet, dass** eine Niveaumesseinrichtung zur Begrenzung des maximalen Schmelzespiegelniveaus in der ersten Ofenkammer (3) vorgesehen ist.

## Claims

1. A smelting fumace, particularly a dual chamber furnace for immersion smelting of contaminated aluminium scrap, including a first (3) and a second (4) furnace chamber, a gas heating system (20, 21), a smoke gas circulation system (15-17) and having a smouldering combustion space (5) that is disposed separately from the dual chamber furnace but is connectible therewith for thermal decontamination of the batch, and through which smouldering combustion space (5) hot smoke gases can be forced from the first furnace chamber (3), **characterised in that** the smoke gases that are forced through the smouldering combustion space (5) are retumed to the first furnace chamber (3).

2. The dual chamber furnace as cited in claim 1, **characterised in that** the smouldering combustion space (5) has at least one preferably opposingly arranged inlet and outlet aperture (18, 19) for smoke gases.

3. The dual chamber furnace as cited in claim 2, **characterised in that** the smouldering combustion space (5) is configured as a hopper for the first furnace chamber (3), is preferably arranged vertically on top thereof and can communicate therewith via a closing element.

4. The dual chamber furnace as cited in claim 3, **characterised in that** two bottom flaps (29) or a slider (6) are provided as the closing element, with which the entire cross-section of the smouldering combustion space (5) can be uncovered.

5. The dual chamber furnace as cited in claim 4, **characterised in that** the smouldering combustion space (5) has a square cross-section in which a correspondingly dimensioned pressure element (9) is movable with axial play.

6. The dual chamber furnace as cited in claim 5, **characterised in that** a covering hood (7) is provided as the outer closure of smouldering combustion space (5), and is furnished with a corresponding cutaway (10) and a guide (8) for the pressure element (9).

7. The dual chamber furnace as cited in claim 6, **characterised in that** at least one gas bumer system (20, 21) is provided in each of the furnace chambers (3, 4), and that the gas bumer systems (20, 21) are equipped on the burner gas side with a controller for constant excess air that is monitored by O² sensors.

8. The dual chamber furnace as cited in claim 7, **characterised in that** the first gas bumer system (20) is controlled for a smoke gas temperature of preferably 600°C in the first furnace chamber (3), and the second gas bumer system (21) is controlled for a smoke gas temperature of preferably 1000°C in the first furnace chamber (4).

9. The dual chamber furnace as cited in claim 8, **characterised in that** the intensity of the formation of smouldering gases is variable on the basis of the prevailing temperature in the smouldering combustion space (5) and the speed of the smoke gases.

10. The dual chamber furnace as cited in claim 9, **characterised in that** the bumer gas flow from the first bumer gas system (20) that is necessary to reach a given temperature of the smoke gas in the first furnace chamber (3) is inversely proportional to the respective flow of smouldering gas for smouldering combustion.

11. The dual chamber furnace as cited in claim 10, **characterised in that** the second furnace chamber (4) is in flow communication with the first furnace chamber (3) via a smoke gas pipe (24), and in flow communication with a bumer air preheater (23) via an exhaust gas pipe (25).

12. The dual chamber furnace as cited in claim 11, **characterised in that** the floor (30) of the first furnace chamber (3) has a raised smelting platform (31) in the area below the smouldering combustion space (5) and which projects out of this area when the level of smelting material is the same in both furnace chambers (3, 4).

13. The dual chamber furnace as cited in claim 12, **characterised in that** a melt pump (27) supplying the first furnace chamber (3) and a throttling melt backflow pipe (32) arranged between the furnace chambers (3, 4) are provided, and that the displacement capacity of melt pump (27) may be set to at least two different levels.

14. The dual chamber furnace as cited in claim 13, **characterised in that** a level measurement device is provided in the first furnace chamber (3) to limit the maximum level of smelting material.

## Revendications

1. Four de fusion, notamment four à chambre double pour la fusion indirecte de grenaille d'aluminium contaminée, comportant une première (3) et une deuxième(4) chambre de four, un chauffage au gaz (20,21), un système de brassage du gaz de combustion (15-17) comportant un espace de distillation lente (5) pour la décontamination thermique de la charge disposé séparément du four à chambre double (1) mais étant néanmoins relié à celui-ci, lequel espace de distillation lente (5) est traversé de manière contrainte par des gaz de combustion chauds de la première chambre de four(3), **caractérisé en ce que** les gaz de combustion guidés à travers l'espace de distillation lente (5) sont réintroduits dans la première chambre de four (3).

2. Four à chambre double selon la revendication 1, **caractérisé en ce que** l'espace de distillation lente (5) présente au moins une ouverture d'admission et une ouverture d'échappement (18,19) des gaz de combustion, disposées de préférence en vis-à-vis.

3. Four à chambre double selon la revendication 2, **caractérisé en ce que** l'espace de distillation lente (5) est configuré comme un puits de remplissage de la première chambre de four (3), est disposé de préférence perpendiculairement à celle-ci et peut être relié à celle-ci par l'intermédiaire d'un élément de fermeture.

4. Four à chambre double selon la revendication 3, **caractérisé en ce que**, comme élément de fermeture, deux trappes de fond (29) ou un tiroir (6) sont prévus, au moyen desquels l'ensemble de la section transversale de l'espace de distillation lente (5) peut être ouvert.

5. Four à chambre double selon la revendication 4, **caractérisé en ce que** l'espace de distillation lente (5) présente une section transversale carrée, dans laquelle un corps de pression (9) configuré de manière adéquate peut être déplacé axialement avec du jeu.

6. Four à chambre double selon la revendication 5, **caractérisé en ce que**, comme fermeture extérieure de l'espace de distillation lente (5), un capot (7) est prévu, lequel présente un évidement (10) adéquat et un dispositif de guidage (8) du corps de pression (9).

7. Four à chambre double selon la revendication 6, **caractérisé en ce que** au moins un système de brûleurs de gaz (20,21) est respectivement prévu dans les chambres de four (3,4) et **en ce que** les systèmes de brûleurs de gaz (20,21) présentent une unité de réglage d'un excédent d'air constant contrôlée par des capteurs d'O2, du côté du gaz combustible.

8. Four à chambre double selon la revendication 7, **caractérisé en ce que** le premier système de brûleurs à gaz (20) est réglé à une température de gaz de combustion de 600°C de préférence dans la première chambre de four (3) et le deuxième système de brûleurs à gaz (21) est réglé à une température de gaz de combustion de 1000°C de préférence dans la deuxième chambre de four (4).

9. Four à chambre double selon la revendication 8, **caractérisé en ce que** l'intensité de la formation de gaz de distillation lente peut varier en fonction de la température et de la vitesse des gaz de combustion prédominantes dans l'espace de distillation lente (5).

10. Four à chambre double selon la revendication 9, **caractérisé en ce que** le courant de gaz combustible du premier système de brûleurs à gaz (20) requis afin d'atteindre une température de gaz de combustion déterminée dans la première chambre de four (3) est inversement proportionnel lors de la distillation lente au courant de gaz de distillation lente respectif.

11. Four à chambre double selon la revendication 10, **caractérisé en ce que** la deuxième chambre de four (4) est en liaison d'écoulement avec la première chambre de four (3) par une conduite de gaz de combustion (24) et avec un réchauffeur d'air de combustion (23) par une conduite de gaz d'échappement (25).

12. Four à chambre double selon la revendication 11, **caractérisé en ce que** le fond (30) de la première chambre de four (3) présente dans la zone située en dessous de l'espace de distillation lente (5) une plate-forme de coulée (31) plus élevée, qui, lorsque le niveau du bain de fusion dans les deux chambres de four (3,4) est identique, saille au dessus de celui-ci.

13. Four à chambre double selon la revendication 12, **caractérisé en ce que** une pompe de métal liquide (27) ayant une fonction de transport dans la première chambre de four (3) et une conduite de retour du métal liquide (32) disposée entre les chambres de four (3,4), ayant une fonction de ralentissement sont prévues et **en ce que** la quantité transportée par la pompe de métal liquide (27) peut être réglée à au moins deux niveaux.

14. Four à chambre double selon la revendication 13, **caractérisé en ce que** un dispositif de mesure de niveau est prévu afin de limiter le niveau du bain de fusion maximal dans la première chambre de four (3).
